# EUROPEAN PATENT SPECIFICATION

(11) **EP 4 725 611 B1**
(45) Date of publication and mention of the grant of the patent: **07.10.2026**
(21) Application number: 24383121.1
(22) Date of filing: 14.10.2024
(51) Int. Cl.: B03D 1/02, B03D 1/14, B03D 1/22, C02F 1/24, C02F 1/78, C02F 1/72, C02F 1/74

(54) **DISSOLVED GAS FLOTATION UNIT AND METHOD OF USING THEREOF FOR WATER TREATMENT**
ENTSPANNUNGSFLOTATIONSEINHEIT UND VERFAHREN ZU IHRER VERWENDUNG ZUR WASSERBEHANDLUNG
UNITÉ DE FLOTTATION À GAZ DISSOUS ET SON PROCÉDÉ D'UTILISATION POUR LE TRAITEMENT DE L'EAU

(43) Date of publication of application: 15.04.2026
(73) Proprietor: FCC Aqualia, S.A., 28050 Madrid (ES)
(72) Inventor: LARA CORONA, Enrique, 41003 Sevilla (ES); ARBIB, Zouhayr, 29649 Mijas (Málaga) (ES)
(74) Representative: Ungria López, Javier

(56) References cited:
- KR-B1- 101 186 922
- US-A- 5 662 804

## Description

### FIELD OF THE INVENTION

The main objective of the present invention is to provide an improved flotation unit for water purification and cleaning, such as drinking water and wastewater.

### BACKGROUND OF THE INVENTION

Nowadays, the mass production of wastewater derived from increasing population and industrialization is of major concern since it poses a remarkable threat to existing water resources. Consequently, reclamation and reuse of wastewater are extremely important to meet the human needs arising from inadequate water supplies. However, the core problem when reusing wastewater is to remove different types of contaminants of emerging concern (CECs), turbidity, suspended solids, BOD₅ and pathogens to meet the latest regulations which are becoming stricter, like Regulation (EU) 2020/741 of the European Parliament of 25 May 2020 on minimum requirements for water reuse.

Removing particles from water using Dissolved Air Flotation (DAF) is a well-known process in water and wastewater treatment plants. In water treatment, the DAF is used as primary clarification and in wastewater treatment, the DAF process is applied for sludge thickening, secondary clarification and as polishing after secondary clarification. A DAF device is a powerful tool in water reclamation which uses air microbubbles attached to suspended solids which develop agglomerates with lower density than water, causing those agglomerates to rise through the water in the flotation tank. The floated solids accumulate on the surface of the flotation tank and are removed hydraulically or mechanically by a skimmer. A conventional DAF device is disclosed in patent KR101054087.

However, in order to remove resistant pathogens and persistent organic compounds a separate removal facility, usually by ozone oxidation, must be installed with the DAF device. Ozone has a strong oxidizing and disinfection ability, but has the serious weakness of the low solubility of ozone leading to the requirement of a high ozone dose.

Dissolved ozone flotation (DOF) is a hybrid process, wherein ozonated air or ozonated oxygen injection is used instead of air in a DAF device. Thanks to the substitution of the flotation gas, DOF combines two methods of treatment in one unit: DAF and ozonation. The first one is separation of suspended solids by gas microbubbles, and the second is oxidation of persistent organic compounds and pathogens disinfection by ozone. The synergy of these two processes allows obtaining a superior treatment effect. Examples of DOF devices can be found in patents KR101186922 B1 and KR100848117 B1.

The gas used in a DOF system is a mixed gas composed of 3% to 11% ozone and 89% to 97% air or oxygen and it can be called ozonated air or ozonated oxygen although it is commonly referred to as "ozone".

DOF technology can reduce the operation and maintenance cost of a conventional ozonation system since it can overcome the serious weakness which is the limited residual disinfection capacity and the low solubility of ozone leading to the requirement of a high ozone dose. The chemical dosage is lower when using a DOF due to the excellent mass transfer using micro and nanobubbles and hence, it can be considered more eco-friendly than conventional ozonation.

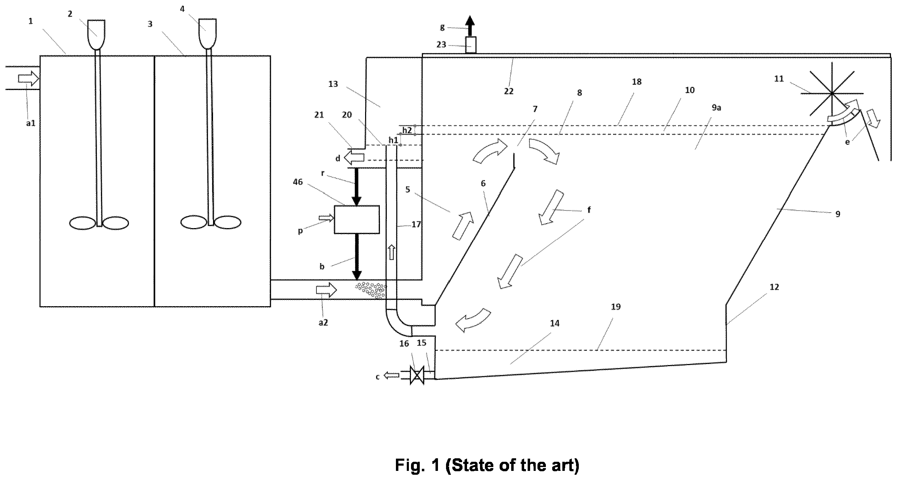

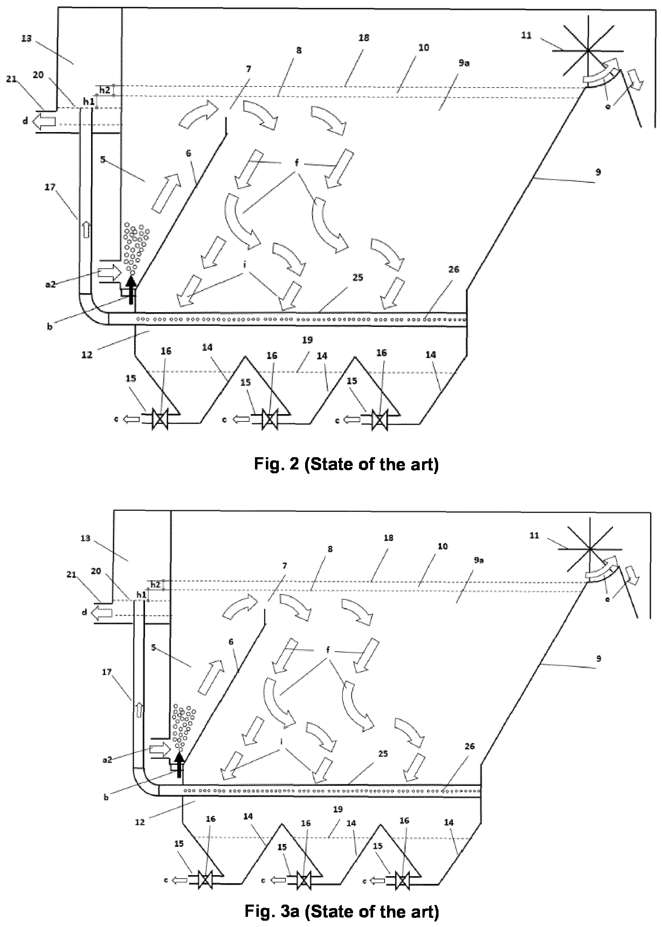

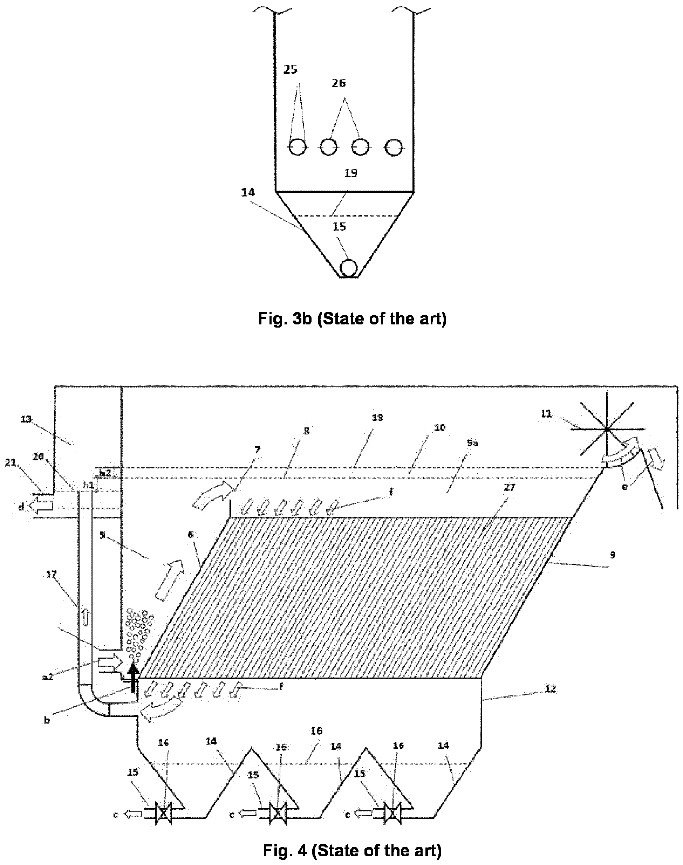

Conventional DAF and DOF units are represented in Figure 1 (state of the art), with the following elements:
- a coagulation tank (1): Raw water inlet flow (a1) enters a coagulation tank (1) wherein coagulant is dosed and mixed with the water using a high-speed mixer (2), forming small flocs.
- A flocculation tank (3): After coagulation, water flow enters a flocculation tank (3) wherein a flocculant is dosed and mixed with the water using a low-speed mixer (4) forming bigger flocs.
- A flotation tank (9), comprising:
   ∘ a contact zone (5) inside the flotation tank (9), wherein the flocculated water inlet flow (a2) and a flow of recirculated water treated in the unit with microbubbles enters.
   ∘ a microbubbles generation device (46) for generating the microbubbles by dissolving a flow of air or oxygen with ozone (p) into a part (r) of the treated water (d), which is recirculated at a pressure of several atmospheres before it is back at atmospheric pressure. This lowers the saturation limit to the point that dissolved gas cannot remain dissolved, at which point it turns into fine bubbles forming the recirculated treated water with microbubbles (b). The flocculated particles (flocs) and the recirculated treated water with microbubbles (b) of a gas injected into the flotation tank (9) get in contact. In a DAF, air is injected, whilst ozonated air or ozonated oxygen is injected in a DOF device, instead or in addition to air. This way, water oxidation by the ozone is simultaneously achieved in the contact zone (5) which results in the removal of contaminants of emerging concern (CECs), pathogen inactivation and toxicity reduction. Microbubbles attach to flocs and create agglomerates with lower density than water, causing those agglomerates to rise through the water while the water is brought upwards by a baffle (6) configured to separate the contact zone (5) from a flotation zone (9a).
   ∘ A flotation zone (9a), wherein water enters from the contact zone (5) thanks to a slot (7) that is located just below the water level (8) inside the flotation tank. The principle behind the flotation process is that microbubbles form a dense gas blanket within the flotation zone (9a). The flocculated particles (flocs) agglomerate with the microbubbles, as they rise to the surface, accumulating and floating in the form of a sludge layer (10), subsequently clarifying the water. The sludge layer (10) has a thickness h₂, between a lower level, which is the same as the water level (8), and an upper level (18) caused by the sludge accumulation.
      The water in the flotation zone (9a) flows downwards, with a downflow velocity (v) also known as "hydraulic loading rate", which is the most important parameter and can be calculated by v=Q/S where Q is the flow rate (Q) and S is the surface area of the flotation zone (9a). The agglomerates of flocs and microbubbles reach a higher up-flow velocity than the downflow velocity v, and thus they are separated from the water. Prior art high-rate DAF devices operate with hydraulic loading rates from 10 to 30 m/h.
      In certain embodiments, the flotation zone (9a) in prior art devices may include a lamella pack (27), that multiply the surface area for the settling of solids and floating of oils (see Figure 4, state of the art).
   ∘ Means for removing and discharging the floatable sludge (e), hydraulically or mechanically, for instance a skimmer (11).
   ∘ A gas pipe (23), located on a flotation cover (22) above the flotation zone (9a) that delimits the upper part of the flotation tank, configured to carry the gas stream (g) generated from microbubbles outside the flotation tank, for instance to an ozone destructor to avoid emissions of ozone gas to the atmosphere.
   ∘ A treated water collection means (12) for the treated water, arranged in the lower part of the flotation zone (9a), said zone being communicated with an outer treated water tank (13) through a treated water pipe (17), or a channel (in the case of big plants) so as to discharge the clean water to the treated water tank (13). The treated water reaches the treated water tank (13) by overflow of the treated water pipe (17) at a water level (20), the final treated water (d) exiting the tank through the treated water outlet pipe (21). Water level (20) is lower than water level in the flotation zone (9a), at a distance or height (h₁) due to pressure drop through pipe (17), although this pressure drop is often negligible.
      The treated water collection means (12) of prior art often includes perforated plates (24, figure 2 state of the art) and perforated pipes (25, 3a).
   ∘ One or more sediment discharge zones (14), arranged in the lower part of the flotation tank and located below the treated water collection means (12), having a sediment level (19) so as to discharge the sediments (c) to the outside of the flotation tank by a sediment pipe (15) having a valve (16).
      The design of the contact zone (5) greatly influences:
      - the ozone transfer efficiency,
      - the dissolved organic carbon (DOC) efficiency, and
      - the hydraulic loading rate.

### • Ozone transfer efficiency.

Contact zone (5) is directly related to ozone transfer efficiency. Ozone transfer efficiency is the ratio between the amount fed (ozone feed) and the amount that leaves the device as off gas (ozone out). Transfer efficiency is important because ozone has a low solubility in water and ozone gas production is energy intensive.

The transfer efficiency increases with decreasing bubble size. Microbubbles have diameters of 1-100 µm, while conventional bubbles used in ozonation are between 2-6 mm. The higher interfacial area and lower rise velocity of microbubbles compared with conventional bubbles means that ozone in the gas phase can be more efficiently transferred into the liquid phase. This is due to a higher contact time and increased contact area of the microbubble with the bulk liquid. However, prior art DOF systems have not developed a proper design of a contact zone and ozone transfer efficiency is usually lower than 90% which causes high ozone doses and thereby high costs and energy consumed.

### • Dissolved organic carbon (DOC) removal efficiency.

Microbubble ozonation has been shown to significantly enhance the rate of degradation of DOC including a range of contaminants of emerging concern (CECs) when comparing to conventional bubbles. Furthermore, microbubbles were shown to be able to oxidize a broader range of organic compounds more quickly than for conventional bubbles (Microbubbles and their application to ozonation in water treatment: A critical review exploring their benefit and future application. Alexander John, Critical Reviews in Environmental Science and Technology, September 2022).

The hydroxyl ions accumulating on the microbubble gas-liquid interface is supposed to promote the self-decomposition of ozone and formation of highly oxidative (OH.) hydroxyl radicals. This increased generation of OH. with microbubbles contributed to enhanced degradation of organic contaminant (Liu et al. 2020).

However, prior art DOF devices achieve low DOC removal efficiency, usually lower than 20% and high ozone and coagulant doses.

### • Hydraulic loading rates.

Low microbubbles-flocs collision and contact is observed in prior art DOF units and hence develop agglomerates with very little microbubbles attached or entrapped within the flocs and with low flotability. With this scenario, there are agglomerates and microbubbles carry over in the effluent even with low hydraulic loading rates.

A DAF or DOF unit is designed with a surface area S of the flotation zone (9a) and a flow rate (Q) which determines the hydraulic loading rate. When the hydraulic loading rate is exceeded the downward velocity of the water increases to such an extent that agglomerates of flocs and microbubbles or just microbubbles which normally rise to the surface leave the tank together with the outlet water. These flocs and microbubbles enter the subsequent filtration step where they behave like particles. The head loss of the filter increases dramatically and causes a more frequent backwash. The operational cost of the filtration process is thereby subject to increase. To add more, this operational cost highly increases when using ozone instead of air in a DOF system with ozone microbubbles carry-over due to high capital and operational cost of producing ozone gas.

Prior art conventional DAF units operate at low hydraulic loading rates usually lower than 10 m/h. Low hydraulic loading rates results in high DAF surface required and associated costs.

Besides, hydraulic shortcuts are usually caused in the treated water collection means (12) as indicates by arrows (f) in figure 1. Hydraulic shortcuts results in the surface area S of the flotation zone (9a) have a large percentage effectively not used for flotation and hence low hydraulic loading rates.

Various systems with improved hydraulics and geometry have been developed to increase hydraulic loading rates and hence effluent quality of conventional DAF systems, as the prior art in Patent US 2015/291444A, figure 2. The treated water collection means (12) of this invention incorporates a perforated plate with orifices (24) spread in a non-uniform pattern. The density and diameter of holes is higher toward the inlet of the DAF and less so at the outlet, which allows for uniform collection of water close to the perforated plant as indicated by arrows (h). However hydraulic shortcuts are still present, as indicated by arrows (f) in figure 2, resulting in an important part of the surface area of the flotation zone (9a) not being operative, thus the possibility of increasing hydraulic loading rates is limited.

In addition, it is inevitable that some high density suspended solids coming with the inlet flow (1) are not easily floated in the flotation zone (9a), but settling over the perforated plate (24) causing to accumulate mud layers which easily affect the quality of the effluent or the orifices to become clogged. It is thus necessary to clean the perforated water collection plate by stopping the machine.

Another invention of the prior art is described in patent CN215559136U (figure 3) wherein the treated water collection means (12) comprises perforated pipes (25) that are arranged along the length of the flotation zone (9a) and uniformly arranged along the direction of the flotation zone (9a) for the water to be treated to flow through holes (26) at both sides of the perforated pipes (25), and also comprising a treated water pipe outlet (17) connected to the treated water tank (13). The holes (26) are configured according to the distance from the entrance (4) of the flotation zone (6) by creating a pressure drop (h₁) to achieve the purpose of uniform water collection through the entire flotation zone (9a). Uniform water collection is obtained close to perforated pipes (25) as indicated by arrows (i). However, hydraulic shortcuts withing the flotation zone (9a) are still present in this patent, as indicated by arrows (f) in figure 3, resulting in an important part of the surface area of the flotation zone (9a) not being operative, thus the possibility of increasing hydraulic loading rates is limited. Hydraulic shortcuts also cause flocs and microbubbles to escape by the clean water outlet pipe (21).

In patent CN215559136U (general view in figure 3a and section in 3b) the sediment discharge zone is located at the bottom of the flotation zone (9a) and includes a plurality of collection pits (14), a plurality of discharge pipes (15) and a plurality of control valves (16) wherein the treated sediment is collected in the collection pits (14). It can be discharged to the outside of the air flotation device through the discharge pipes (15), and the control valves (16) are used to open and close control of the discharge.

Dissolved air flotation with inclined plates, also known as lamella (27), inside the flotation zone (9a) is described in figure 4 (extracted from https://www.ecologix.com/ec-phone/english/products3.html). This is a design that enhances separation and clarification by including said lamella. The main advantage of DAF with lamella over other DAF units is the large effective flotation area caused by the use of inclined plates, which increase the hydraulic loading rated of the DAF. The inclined plates mean the clarifier can operate with hydraulic loading rates 2 to 4 times that of conventional DAF, which allow a greater influent flow rate avoiding flocs and microbubble carry-over in the effluent.

Whilst the lamella DAF has overcome many difficulties encountered in traditional DAF, there are still some disadvantages involved with the configuration and running of the equipment, affecting the continuity of its operation and efficiency. The first disadvantage is (still) hydraulic shortcuts, as indicated by arrows (f) in figure (4) in the flotation zone (9a). As the water turns by the slot (7) from the feed to the inclined plates (27) in the flotation zone (9a) results in an uneven flow distribution through the lamella pack (27) by preferably going through a few inquinated plates close to the treated water pipe (17), as indicated by arrows (f), while the flow barely goes through the rest of the inclined plates. Due to this hydraulic shortcuts (f), hydraulic loading rates higher than 20 m/h are difficult to get with this design. Another problem encounter is that regular maintenance is required as sludge flows down the inclined plates leaving them dirty. Regular cleaning helps prevent uneven flow distribution and low efficiency of the process.

Another device of the prior art is described in patent EP 0888246 B1 (figure 5) which intends to solve problems described from lamella DAF. This device incorporates a perforated plate with orifices (24) communicating with narrow passages for the inclined plates or lamella. The water leaves the lamella through the orifices and the water is evenly distributed between the lamella. Because of the restrictions created by the outlet orifices a small head loss is created, which regulates the flow so as to evenly distribute it over the set of lamella as indicated by arrows (j), avoiding hydraulic shortcuts.

Similarly to prior art of figure 2, a great disadvantage of this patent is that some high density suspended solids coming with the flocculated water inlet flow (a2) are not easily floated in the flotation zone (9a), but settling over the perforated plate (24), causing to accumulate mud layers which easily affect the quality of the effluent or the orifices to become clogged. It is necessary to clean the perforated water collection plate by stopping the machine.

Another invention of the prior art is described in figure 6 (also found in US5662804 and *https:*//*uihydro.com*/*produced-water-daf*). It is an integration of prior art figures 3 and 4, with perforated pipes (25) below the lamella pack (27). This system intends to distribute the flow evenly over the lamella pack by perforated pipes (25), wherein the perforated pipes (25) are arranged along the length of the flotation zone (9a) for the water to be treated to flow through holes (26) at both sides of the perforated pipes (25) and also comprising a treated water pipe outlet (17) connected to the treated water tank (13). Holes (26) are configured according to the distance from the entrance (7) of the flotation zone (9a) by creating a pressure drop (h1) to achieve the purpose of uniform water collection through the entire lamella pack 27). Uniform water collection is obtained close to perforated pipes (25) as indicated by arrows (h). Hydraulic shortcuts within the flotation zone (9a) are still present in this patent, as indicated by horizontal flow arrows (k) below lamella pack (22), resulting in an important part of the surface area of the lamella pack (27) not being operative, thus the possibility of increasing hydraulic loading rates is limited.

Therefore, to summarise, certain important problems arise with known DAF and DOF units as those commented above, illustrated by patent KR101186922 B1 and KR100848117B1 (DOF), and KR101054087 (conventional DAF):
- lower ozone transfer efficiency than 90%;
- dissolved organic carbon (DOC) removal efficiency lower than 30% with high coagulant and ozone doses;
- hydraulic loading rates lower than 30 m/h; and
- clogging in the treated water collection means (12).

At present, there is no flotation technology which is able to overcome the problems detected in the prior art. And this is the main aim of the present invention, mainly focuses in a dissolved gas flotation unit and method of high rate wherein the design of the contact zone and the treated means for water collection is optimized.

### DESCRIPTION OF THE INVENTION

The present invention, according to claim 1, is directed to a dissolved gas flotation unit, of the DAF type, wherein the gas used contains ozone, i.e. the gas is a mixture of ozone with air or oxygen, as the DOF units. The gas would be named as "ozone" in this text, even when the invention covers the use of a mixture of ozone with other gas, such as air or oxygen. The invention will be referred in the present document as dissolved ozone flotation unit of DOF, or just simply "the unit".

The claimed unit comprises:
- a contact tank (28), having a raw water flow inlet (a1) connected to a coagulation zone (29) containing a mechanical mixer (42), and an adjacent flocculation zone (30); connected to a
- a flotation tank (9), comprising:
   ∘ a flotation zone (9a) at the upper part;
   ∘ a skimmer (11) for hydraulic or mechanical removal of floatable sludge (e);
   ∘ a vertical baffle (7) at the entry of the flotation zone (9a) inlet, configured to stretches the water inlet section forming a slot between the surface of the water level inside the flotation tank (9) and the upper end of the vertical baffle (7); and
   ∘ a lamella pack (27) located at the lower part;
- a treated water collection means (12) for collecting the treated water, having:
   ∘ one or more pipes (25) perforated with holes (26) and located under the lamella pack (27), wherein the perforated pipes (25) are arranged along the length of the flotation tank (29) for the treated water to flow through the holes (26); and
   ∘ a treated water tank (13) configured to collect the treated water, like those systems known in the prior art. The tank (13) comprises a treated water pipe (17) that connects a first end of the perforated pipes (25) with the inner part of the tank (13), and a treated water outlet pipe (21), for which the final treated water (d) exits the unit;
- a plurality of sediment discharge zones (14), located below the perforated pipes (25); and configured for the decantation of non-previously floated particles. Each sediment discharge zone (14) has a sediment pipe (15) with and opening and closing valve (16) for the exit of sediments; and
- a microbubbles generation device (46) which dissolves a flow of gas containing ozone (p) into a part (r) of the treated water (d) thus forming a recirculated treated water with ozone microbubbles (b) that is injected into the contact tank (28);
characterized in that:
the mechanical mixer (42) inside the contact tank (28) has a mixing gradient velocity between 500 and 1500 sec-1, preferably between 700 and 1000 sec-1; and the flocculation zone (30) is located above the coagulation zone (29); said coagulation zone (29) comprising an inlet for injection of recirculated treated water with ozone microbubbles (b) connected to the microbubble generation device (46) through a recirculation pipe (43); and a coagulant inlet, in such a way that oxidation is achieved together with coagulation by the ozone action in the water, and the microbubbles are trapped inside the flocs in the flocculation zone (30); said flocculation zone (30) being further divided into two sections:
   - a first, mixing section (30a), located at the coagulation and oxidation zone (29) outlet, comprising:
      ∘ an inlet flocculant pipe at the entrance for injecting flocculant (m);
      ∘ a plurality of triangular baffles (31) that divides the first mixing section (30a) in channels or sections through which the water circulates, the triangular baffles (31) being located at a distance h₃ from each other so that the water circulates at a speed v1 between 1 m/s and 2 m/s;
   - and a second, upper flocs-growing section (30b) located above the first mixing section (30a), also comprising a plurality of triangular baffles (31) that divides the second upper flocs-growing section (30b) in channels or sections through which the water circulates, the baffles being located at a distance h4 from each other so that the water circulates at a speed v2 between 0.3 m/s and 1 m/s; and the treated water collection means (12) comprises:
   - a plurality of vertical baffles (32) between the lamella pack (27) outlet and the holes (26) of the perforated pipes (25), forming sections with a width h5 between two consecutive vertical baffles (32), and creating vertical channels for the treated water downwards;
   said dissolved ozone flotation unit further comprising:
   a plurality of vertical baffles (33) below the perforated pipes (25), delimiting the plurality of sediment discharge zones (14);
   - a plurality of triangular baffles (34), located at the upper part of each sediment discharge zone (14) (i.e. below the perforated pipes (25)), having an upper vertex of the triangle between 30º and 90º; and
      ∘ a sediment level sensor (35) for opening and closing the sediment valve (16) to discharge the sediments (c), configured to detect the height variations of the level (19a, 19b) of the sediment layer (19), and to maintain the sediment level above the bottom of the triangular baffles (34), so that a sediment layer (19) formed inside the sediment discharge zones (14) by accumulation has a level (19a, 19b) whose height over the lower part of the triangle baffles (34) is always kept between 100 mm and 400 mm, preferably between 200 mm and 300 mm.

The contact tank (28) is an independent element located outside the flotation tank (9). Thanks to the injection of ozone microbubbles in the contact tank (28), together with the vertical disposition of the two zones (29, 30), coagulation and oxidation processes take place simultaneously in the first zone (29), which is in the lower area of the contact tank (28). There is a synergy between coagulation and ozonisation by two mechanisms: firstly, modification of organic matter by ozone promotes coagulation and hence a lower dose of coagulants; and secondly, coagulant catalyses ozonation, reducing the ozone dose. The coagulation and oxidation zone (29) ensures effective flocs formation by coagulation of raw water (a1) and it also promotes the ozone microbubbles and the flocs collision, and therefore encourages many microbubbles to adhere to the flocs by an effective mixing.

The flocculation zone (30) configuration is also relevant for enhancing the efficiency, in such a way that the microbubble is trapped inside the floc, unlike the prior art the wherein microbubble is injected after flocculation and therefore there is only external adhesion of the ozone microbubble to the floc. As flocs grow, ozone microbubbles become entrapped within the floc structure, decreasing the density of the total agglomerate and increasing its floating speed and hence the hydraulic loading rate. The entrapment of ozone microbubbles within the flocs structure results in a water flow containing big flocs agglomerates (o), which, together with the coagulation action at the same tank (28), allows obtaining a higher ozone transfer efficiency, a higher DOC removal efficiency and bigger flocs with lower density and as a consequence, better flotability that that reported in the prior art while reducing ozone doses.

The triangular baffles (31) in both sections (30a, 30b) of the flocculation zone (30) have an inclined shape, with an angle α from 15º to 60º, more preferably from 25º to 45º. The triangular shape of the baffles (31) provides inclined walls that improve the upward evacuation of microbubbles and downward sedimentation of particles. Besides, the disposition of baffles in the two sections (30a, 30b) of the flocculation zone (30) avoids the use of any mechanical mixer.

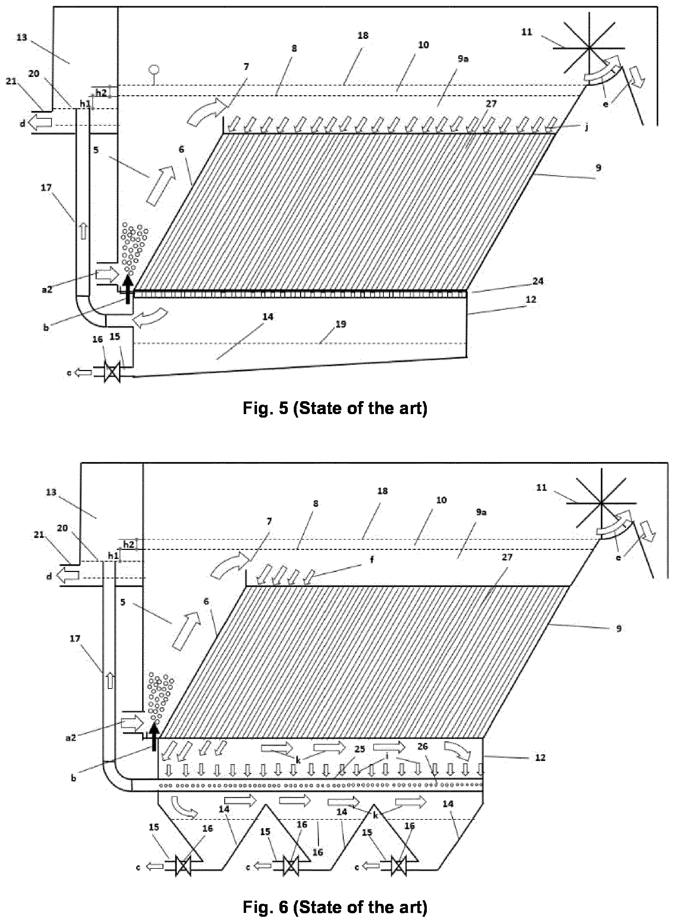

The efficiency of the whole unit is also enhanced thanks to the new treated water collection means (12), since the vertical, parallel baffles (32) cause an identical (vertical) flow through each of the sections with a width h₅, and creating channels as indicated by arrows (I), avoiding horizontal flow shortcuts unlike prior art (see figure 6); without hydraulic shortcuts, the flow distributes uniformly over the entire lamella pack (27) as indicated by arrows (i). Horizontal flow shortcuts (k) under perforated pipes (25) are also avoided thanks to the triangular shape of the baffles (34). The maintenance of a sediment level (19) in the sediment discharge zones (14) by means of a control sensor (35) also hinders horizontal flow below perforated pipes (25) forcing total flow to go through holes (26) of perforated pipes (25). When an upper sediment level (19a) is reached by accumulation, the sensor sends an opening signal to the valve (16), so as to discharge the sediments (c) outside the unit through the sediment pipe (15). The sediments valve (16) opens until the level has reached its lower sediment level (19b), always above the triangular baffles (34).

As DAF and DOF systems are linked to efficiency loss due to frequent problems of clogging and accumulation of solids in the treated water collection means (12), more specifically in the pipe holes (26) and in the narrow passages of the lamella pack (27) which end up creating hydraulic shortcuts and loss of efficiency in the flotation equipment, a particular embodiment of the present invention includes cleaning means for emptying the unit with unclogging purpose. With the aim of improving the efficiency of the process, the cleaning means of this preferred embodiment comprises:
- a water level sensor (38), configured to control the variations of the water level (8) inside the flotation tank (9);
- connected to a first opening-closing valve (36) located in the pipe (43), for recirculating part of the treated water into the contact tank (28);
- and also connected to a second opening-closing valve (37) that is located in a perforated pipe (44), the perforated pipe (44) being located below the lamella pack (27) and below the perforated pipes (25) inside the flotation tank (9), and connected to the pipe (43), configured to redirect the flow of treated water with ozone microbubbles (b) into the flotation tank (9); the perforations in said perforated pipe (44) being injection points (45), those injection points (45) being any type of nozzles or holes; and
- the perforated pipes (25), configured to inject air macrobubbles into the flotation tank (9), comprising
   - a blower (39), at a second end of the perforated pipes (25), configured to inject a flow of air through the pipes (25); and
   - a first and a second blower valves (41, 40) at the first and second ends of the perforated pipes (25), respectively, said valves being configured to open or close for stopping (valve 41) the flow of treated water through pipe (17) into the treated water tank (13) and for blowing (valve 40) the flow of air into the pipes (25).

The sensor (38) detects that the height (h₁) of the water level (8) inside the flotation tank (9) reaches a maximum value due to clogging. At that moment, the cleaning process stars:
- stopping the entry of water inlet flow to be treated (a1) into the flotation unit, which shuts down;
- putting the skimmer (11) inside the flotation tank (9) into operation until the sludge layer (10) at the flotation tank (9) is completely eliminated, that is, until h₂=0;
- at the same time, opening the sediments valves (16) so as to discharge the flow of sediments (c) to the outside of the flotation unit by the sediment pipes (15);
- closing the valve (36) in the pipe (43) and opening the valve (37) in the pipe (44), so that the injection of the flow of recirculated water with ozone microbubbles (b) is redirected: said flow (b) enters the flotation tank (9) through the injection points (45) of the pipe (44), under the lamella pack (27);
- closing the blower valve (41) for stopping the flow of treated water into the tank (17); and
- opening the blower valve (40) and turning on the blower (39).

Thanks to these actions, an air flow produced by blower (39) goes through holes (26) of the perforated pipes (25), producing air macrobubbles which create a mixing effect throughout the entire flotation tank (9). At the same time, the flow of treated water with microbubbles (b) is injected into the flotation tank (9) through the perforated pipe (44). The agitation effect of the air macrobubbles together with the ozone microbubbles create a cleaning effect on the solids adhering to the lamella or that have blocked the holes (26) in the perforated pipes (25), as well as the removal of biological fouling.

This cleaning period lasts between 15 and 30 minutes. Subsequently, the sediment valves (16) open so as to discharge the sediments (c) and all the contents of the flotation zone (9a) to the outside of the unit by the sediment pipes (15).

The present invention is able to achieve simultaneously the following advantages when treating drinking water and wastewater effluents:
- ozone transfer efficiency over 96%;
- dissolved organic carbon (DOC) removal efficiency over 30% while reducing coagulant and ozone doses up to 20%;
- hydraulic loading rates from 40 m/h to 50 m/h in comparison to lower than 30 m/h in prior art with no carry-over of microbubbles and/or agglomerates of flocs and microbubbles in the effluent; and also
- low clogging of both lamella and the treated water collection means.

It is another object of the present invention, according to claim 8, the process for treating water by means of the claimed flotation unit. The process comprises the following steps:
a) injecting a flow of raw water (a1), a coagulant (n) and a flow of recirculated water with ozone microbubbles (b) into the coagulation and oxidation zone (29) of the contact tank (28);
b) collecting the treated water into the treated water tank (13) through the treated water pipe (17), after the mixture of raw water (a1), the ozone microbubbles and the coagulant that form flocs passes through the contact tank (28), the flotation zone (9a), the lamella pack (27), the plurality of vertical baffles (32) between the lamella pack (27) outlet and the holes (26) of the perforated pipes (25);
wherein the process further comprises monitoring the sediment level (19) inside the sediment discharge zones (14) by means of the control sensor (35), the sensor (35) sending an opening signal to the valve (16) when an upper sediment level (19a) is reached, so as to discharge the sediments (c) outside the flotation unit through the sediment pipe (15) until the sediment level (19) reaches its lower level (19b) above the triangular baffles (34).

In a preferred embodiment, the process comprises a cleaning stage, said cleaning stage comprising the following steps:
- closing the injection of the raw water flow (a1) into the flotation unit when the water level sensor (38) detects that the height (h₁) of the water level (8) inside the flotation tank (9) reaches a maximum value;
- putting the skimmer (11) into operation for completely eliminating the sludge layer (10) at the flotation tank (9) until h₂=0;
- at the same time, opening the sediments valves (16) so as to discharge the flow of sediments (c) to the outside of the flotation unit through the sediment pipes (15);
- closing valve (36) in pipe (43) and opening valve (37) in pipe (44) for injecting the flow of treated water with ozone microbubbles (b) into the flotation tank (9) through the injection points (45) of the pipe (44), under the lamella pack (27);
- closing the second blower valve (41), opening the first blower valve (40) and turning on the blower (39)and, so that air flow is injected through holes (26) of the perforated pipes (25), producing air macrobubbles which create a mixing effect throughout the entire flotation tank (9), that together with the ozone microbubbles create a cleaning effect on the solids adhering to the lamella or that have blocked the holes (26) in the perforated pipes (25), as well as the removal of biological fouling; and
- subsequently, opening the sediment valves (16) so as to discharge the sediments (c) and all the contents of the flotation zone (9a) to the outside of the flotation unit by the sediment pipes (15).
This cleaning period lasts between 15 and 30 minutes.

A third object, according to claim 10, which implements the previous process for water treatment, is a process for cleaning and unclogging the claimed unit, the process comprises the steps comments above.

And a four object of the invention, according to claim 12, is the use of the claimed unit for cleaning and/or purifying water.

### BRIEF DESCRIPTION OF THE DRAWINGS

**Figure 1** **(Prior art)** illustrates a well-known schematic representation of a conventional dissolved gas flotation apparatus.
   1. Coagulation tank
   2. Coagulation mixer
   3. Flocculation tank
   4. Flocculation mixer
   5. Contact zone
   6. Separation bafle
   7. Slot
   8. Water level in flotation zone
   9. Flotation tank
   9a. Flotation zone
   10. Sludge layer
   11. Skimmer
   12. Treated water collection means
   13. Treated water tank
   14. Sediment discharge zone
   15. Sediments pipe
   16. Sediments valve
   17. Treated water pipe
   18. Sludge layer upper level
   19. Sediment level
   20. Water level in ctreated water tank
   21. Treated water outlet pipe
   22. Flotation cover
   23. Gas pipe.
   46. Microbubble generation device
   a1. Raw water inlet flow
   a2. Flocculated water inlet flow
   b. Recirculated water with gas microbubbles
   c. Sediment discharge
   d. Final clarified water
   e Floated sludge discharge
   f. Hydraulic shortcuts
   g. Gas to ozone destructor
   p. Flow of gas to microbubble generation device (46)
   r. Flow of recirculated treated water from the treated water tank (13)
   h1. Water levels distance
   h2. Sludge layer thickness
**Figure 2** **(Prior art)** illustrates a well-known schematic representation of a dissolved gas flotation apparatus with perforated plate with orifices.
   24. Perforated plate with orifices
   h. Uniform water collection close to perforated plate.
**Figure 3a** **(Prior art)** illustrates a well-known schematic representation of a dissolved gas flotation apparatus with perforated pipes.
   25. Perforated pipes
   26. Holes in pipes
   i. Uniform water collection at perforated pipes
**Figure 3b** **(Prior art)** illustrates a well-known schematic section of a dissolved gas flotation apparatus with perforated pipes.
   25. Perforated pipes
   26. Holes in pipes
   i. Uniform water collection at perforated pipes
**Figure 4** **(Prior art)** illustrates a well-known schematic representation of a dissolved gas flotation apparatus with a lamella pack.
   27. Lamella pack
**Figure 5** **(Prior art)** illustrates a well-known schematic representation of a dissolved gas flotation apparatus with a lamella pack and perforated plat with orifices.
   i. Uniform water distribution over lamella pack (27)
**Figure 6** **(Prior art)** illustrates a well-known schematic representation of a dissolved gas flotation apparatus with a lamella pack and perforated pipes.
   k. Horizontal flow shortcut
**Figure 7** **(Present invention)** illustrates a schematic representation of the dissolved ozone flotation apparatus of the present invention.
   1. Coagulation tank
   2. Coagulation mixer
   3. Flocculation tank
   4. Flocculation mixer
   5. Contact zone
   6. Separation baffle
   7. Slot
   8. Water level in flotation zone
   9. Flotation tank
   9a. Flotation zone
   10. Sludge layer
   11. Skimmer
   12. Treated water collection means
   13. Treated water tank
   14. Sediment discharge zones
   15. Sediments pipe
   16. Sediments valve
   17. Treated water pipe
   18. Sludge layer upper level
   19a upper sediment level
   19b lower sediment levle
   20. Water level in clarified water tank
   21. Treated water outlet pipe
   22. Flotation cover
   23. Off-gas pipe.
   25. Perforated pipes
   26. Holes in pipes
   27. Lamella pack
   28. Contact tank
   29. Coagulation zone
   30. Flocculation zone
      30a. Mixing section
      30b. Flocsgrowing section
   31. Triangular baffles
   32. Vertical baffles
   33. Separation baffles for the sediment discharge zone
   34. Triangular baffles
   35. Sediment level sensor
   36. Water Valve
   37. Water Valve
   38. Water level sensor
   39. Blower for air cleaning
   40. Blower valve
   41. Blower valve
   42. Mixer
   43. Recirculation pipe
   44. Perforated pipe
   45. Injection points
   46. Microbubble generation device
   a1. Raw water inlet flow
   b. Recirculated flow of treated water with ozone microbubbles
   c. Sediment discharge flow
   d. Final treated water flow
   e. Floated sludge discharge flow
   g. Gas flow to ozone destructor
   j. Uniform water flow distribution over lamella
   l. Uniform water collection flow between baffles
   m. Flocculant injection flow
   n. Coagulant injection flow
   o. Water flow with ozone microbubbles and flocs agglomerates
   p. Flow of gas to microbubble generation device (46)
   r. Treated water recirculation flow
   h1. Water levels distance or height
   h2. Sludge layer thickness
   h3. Distance between baffles in mixing section
   h4. Distance between baffles in flocs growing section
   h5. Distance between vertical baffles
   v1. Flow velocity in mixing section
   v2. Flow velocity in flocs growing section

### DETAILED DESCRIPTION OF THE INVENTION

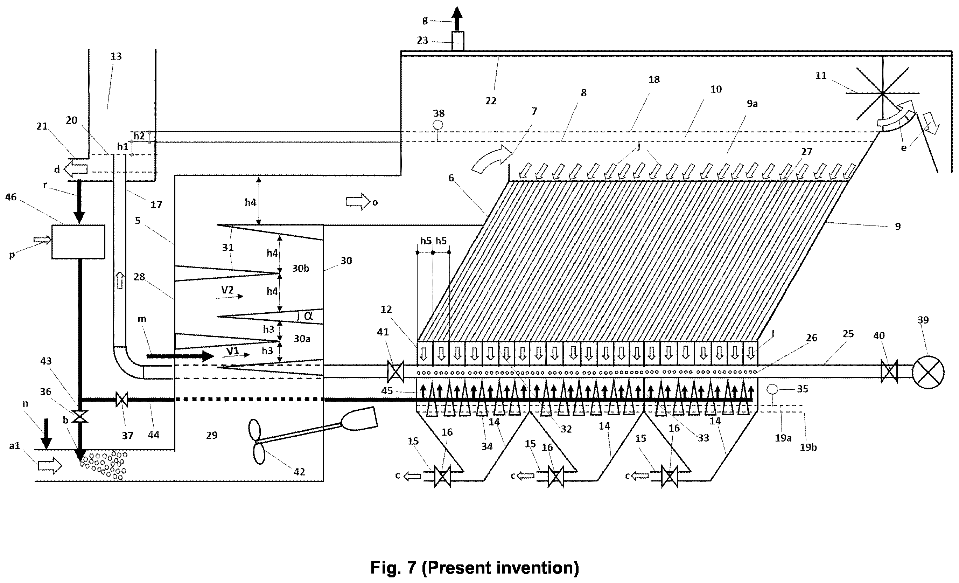

Figure 7 illustrates a detailed embodiment of the present invention. The following section disclose said embodiment, for illustrative purpose, and also preferred features that can be independently applied to the essential unit disclosed in the previous section.

The dissolved ozone flotation unit of DOF object of the invention comprises a contact tank (28), wherein the following elements are injected:
- a raw water inlet flow (a1) to be treated,
- a recirculation flow of part of the treated water with ozone microbubbles (b), and
- a coagulant (n).

The contact tank (28), located outside the flotation tank (9), is divided into two zones:
- a first entry zone that is a coagulation and oxidation zone (29), and
- an adjacent, upper second zone that is a flocculation zone (30).

The two zones (29, 30) are arranged in a vertical position, the second zone (30) being above the first zone (29), which is in the lower area of (inside) the contact tank (28).

The coagulation and oxidation zone (29), has:
- an entry (for instance, an inlet pipe) through which the water inlet flow (a1) is injected,
- an inlet for the flow of treated water (r) mixed with ozone microbubbles (b), microbubbles which are produced at the microbubble generation device (46),
- an inlet for the coagulant injection (n), and
- a mechanical mixer (42) having a mixing gradient velocity between 500 and 1500 sec⁻¹, preferably between 700 and1000 sec⁻¹, configured to mix the water inlet flow (a1) with the rest of elements.

Preferably, the gas is composed of 3% to 11% ozone and 89% to 97% air or oxygen (it can be called "ozonated air" or "ozonated oxygen"). Besides, the experience in this invention reveals that the volumetric mass transfer coefficient in the coagulation and oxidation zone (29) can be significantly enhanced through the use of ozone microbubbles when a mixing velocity gradient is 700-1000 sec⁻¹.

To optimize the results, hydraulic residence time in the coagulation and oxidation zone (29) is between 5 and 15 min, which is enough for simultaneous coagulation, high ozone transfer efficiency and high DOC removal efficiency.

After passing through the coagulation and oxidation zone (29), the water flow containing the ozone microbubbles and the coagulated particles is directed towards the upper adjacent flocculation zone (30). The flocculation zone (30) is further divided into two sections:
- a first, mixing section (30a), which is directly connected to the coagulation and oxidation zone (29), and an upper flocs-growing second section (30b). The mixing section (30a) comprises:
   - an inlet flocculant pipe at the entry of the section (30a) for injecting flocculant (m), which mixes with the small flocs attached to the microbubbles generated in the coagulant and oxidation zone (29); and
   - a plurality of triangular baffles (31) that divides the mixing section (30a) in channels or sections that gives the zone the configuration of a single pathway, through which the water circulates at a speed v1 between 1 m/s and 2 m/s for encouraging mixing. The triangular baffles (31) are located at a distance h₃ from each other so that water circulates at that speed through one or more channels created by the triangular baffles (31).

The triangular baffles (31) have a triangular, inclined shape with an angle α from 15º to 60º, more preferably from 25º to 45º. The inclination of the triangular baffles improves the upward evacuation of microbubbles and downward sedimentation of particles.

The second zone is a flocs growing section (30b) that also comprises a plurality of baffles (31) that divide the zone in one or more channels (depends on the number of baffles (31)) through which the water circulates at a speed v2 between 0.3 and 1 m/s. The baffles (28) are located at a distance h₄ from each other so that water circulates at that speed through the channels/channel. This section (30b) receives the water flow from the adjacent mixing section (30a), wherein particles join together into bigger flocs by the flocculant action. As in section (30a), the baffles (31) have a triangular shape, following the same criteria as for the previous section (30a).

Preferably, the hydraulic residence time in the flocculation zone (30) is between 40 s and 180 s.

Finally, water flow with big flocs agglomerates (o) enters the flotation tank (9) from the flocs growing section (30b). The flotation tank (9) is commonly known in the prior art, and comprises:
- a flotation zone (9a) at the upper part of the flotation tank (9), whose upper limit is bounded by a cover (22) having an outlet gas pipe (23) for letting the flow of gas (g) exist the flotation unit;
- a vertical baffle (7) at the entry of the flotation zone (9a), configured to stretch the water inlet section, forming a slot between the surface of the water level (8) inside the flotation tank (9) and the upper end of the vertical baffle (7); and
- a lamella pack (27) located at the lower part of the flotation zone (9a).

The water flow (o) with ozone microbubbles and flocs agglomerates enters through the slot formed by the vertical baffle (7), configured to direct the water flow upwards at the entry of the flotation zone (9a), resulting in the water flow going downwards through the lamella pack (27) and solids rising to the surface, subsequently clarifying the water. The floated solids thus accumulate on the surface of the flotation zone (9a) forming a sludge layer (10) having a thickness (h₂) determined by the water level (8), which is the lower level, and an upper level (18) of sludge. As in the prior common knowledge, the flotation tank (9) comprises a skimmer (11) for hydraulic or mechanical removal of the floatable sludge (e), which is finally discharged.

The dissolved ozone flotation apparatus of DOF of the present invention comprises a treated water collection means (12) for collecting the treated water downwards, located below the lamella pack (27) at the lower part of the flotation tank (9).

This treated water collection means (12) is made of one or more pipes (25) perforated with holes (26) and located under the lamella pack (27), wherein the perforated pipes (25) are arranged along the length of the flotation tank (29) for the treated water to flow through the holes (26). The holes (26) are configured to create a pressure drop (h₁) between 5 mbar and 50 mbar, preferably between 20 mbar and 30 mbar, achieving the purpose of uniform water collection through the perforated pipes (25). A uniform water collection is thus obtained between the lower part of the lamella pack (27) and the upper part of the perforated pipes (25), as indicated by arrows (I).

The invention aims to distribute the flow evenly over the lamella pack (27) by the new treated water collection means (12). For this purpose, the treated water collection means (12) further comprises:
- a plurality of vertical baffles (32) between the outlet of the lamella pack and the holes (26) of the perforated pipes (25), forming sections with a width h₅ (preferably from 300mm to 500 mm) between two consecutive vertical baffles (32), and forming vertical channels for the treated water downwards;
- a plurality of vertical baffles (33) below the perforated pipes (25), delimiting a plurality of sediment discharge zones (14);
- a plurality of triangular baffles (34), located at the upper part of the sediment discharge zones (14) (i.e. below the perforated pipes (25)). Triangular baffles (34) having an upper vertex of the triangle between 30º and 90 º to facilitate the decantation of particles not floated in the flotation action;
- the sediment discharge zones (14) are located below the treated water collection means (12), and configured for the decantation of non-previously floated particles. Each sediment discharge zone (14) has a sediment pipe (15) with an opening and closing valve (16) for the ejection of sediments. A layer of sediments (19) is formed inside the sediment discharge zones (14), whose height is always kept over the lower end of triangular baffles (34); between 100 mm and 400 mm, preferably between 200 mm and 300 mm and
- a sediments level sensor (35), preferably a sensor of ultrasonic type, configured to detect the height variations of the level of sediments, maintaining the sediment level (19) over the lower end (i.e. the bottom) of the triangular baffles (34).

Finally, like well-known devices of the prior art, the unit of the invention comprises a treated water tank (13) configured to collect the treated water, like those systems known in the prior art. The tank (13) comprises a treated water pipe (17) that connects the (exit) first end of the perforated pipes (25) with the inner part of the tank (13), and a treated water outlet pipe (21), for which the final treated water (d) exits the treated water tank (13) and the unit. The end of the pipe (17) inside the tank (13) forms a water level (20). The water level (20) is lower than water level (8) in the flotation zone (9a), at a distance (h₁) due to pressure drop through holes (24) of perforated pipes (25). This distance (h₁) increases when clogging in the system also increases.

The preferred flotation unit comprises cleaning means having:
- a water level sensor (38), configured to control the variations of the water level (8) inside the flotation tank (9);
- connected to an opening-closing valve (36) located in the pipe (43), for recirculating part of the treated water into the contact tank (28);
- a perforated pipe (44) located inside the flotation tank (9), below the lamella pack (27) and below the perforated pipes (25), having an opening-closing valve (37), and configured to redirect the flow of recirculated treated water with ozone microbubbles (b) into the flotation tank (9); the perforations in said perforated pipe (44) being injection points (45), those injection points (45) being any type of nozzles or holes; and
- the perforated pipes (25), configured to inject air macrobubbles into the flotation tank (9), comprising
   - a blower (39), at a second end of the perforated pipes (25), configured to inject a flow of air through the pipes (25); and
   - a first and a second blower valves (40, 41) at the first and second ends of the perforated pipes (25), respectively, said valves being configured to open or close for stopping (valve 41) the flow of treated water through pipe (17) into the treated water tank (13) and for blowing (valve 40) the flow of air into the pipes (25).

The operation of this flotation unit is as disclosed in the previous section, wherein the process treating water is commented, as well as the cleaning stage.

## Claims

1. A dissolved ozone flotation unit of the DAF type, wherein the gas used contains ozone, comprising:
- a contact tank (28), having a raw water flow inlet (a1), a coagulation zone (29) containing a mechanical mixer (42) and connected to said raw water flow inlet (a1), and a flocculation zone (30) adjacent to said coagulation zone (29);
- a flotation tank (9) connected to said contact tank (28) and comprising:
∘ a flotation zone (9a) at the upper part of said flotation tank (9);
∘ a skimmer (11) for hydraulic or mechanical removal of floatable sludge (e);
∘ a vertical baffle (7) at the entry of the flotation zone (9a), configured to stretch across the water inlet section so as to form a slot between a level (8) corresponding to the surface of the water inside the flotation tank (9) and the upper end of the vertical baffle (7), the water flow entering the flotation zone (9a) through said slot; and
o a lamella pack (27) located at the lower part of the flotation zone (9a);
- a treated water collection means (12) for collecting the treated water, having:
∘ one or more pipes (25) perforated with holes (26) and located under the lamella pack (27), wherein the perforated pipes (25) are arranged along the length of the flotation tank (29) for the treated water to flow through the holes (26);
∘ a treated water tank (13) configured to collect the treated water, having a treated water pipe (17) that connects a first end of the perforated pipes (25) with the inner part of the tank (13); and having a treated water outlet pipe (21), through which the final treated water (d) exits the treated water tank (13) and the dissolved ozone flotation unit;
- a plurality of sediment discharge zones (14), located below the perforated pipes (25) and configured for the decantation of non-previously floated particles, where each sediment discharge zone has a sediment pipe (15) with an opening and closing sediment valve (16) for the exit of sediments; and
- a microbubbles generation device (46) which dissolves a flow of gas containing ozone (p) into a part (r) of the treated water (d) thus forming a recirculated treated water with ozone microbubbles (b) that is injected into the contact tank (28);
**characterized in that**:
the mechanical mixer (42) inside the contact tank (28) has a mixing gradient velocity between 500 and 1500 sec-1, preferably between 700 and 1000 sec-1; and the flocculation zone (30) is located above the coagulation zone (29); said coagulation zone (29) comprising an inlet for injection of recirculated treated water with ozone microbubbles (b) connected to the microbubble generation device (46) through a recirculation pipe (43); and a coagulant inlet, in such a way that oxidation is achieved together with coagulation by the ozone action in the water, and the microbubbles are trapped inside the flocs in the flocculation zone (30); said flocculation zone (30) being further divided into two sections:
- a first section, which is a mixing section (30a), located at the coagulation and oxidation zone (29) outlet, comprising:
∘ an inlet flocculant pipe at the entrance for injecting flocculant (m);
∘ a plurality of triangular baffles (31) that divides the first mixing section (30a) in channels or sections through which the water circulates, the triangular baffles (31) being located at a distance h₃ from each other so that the water circulates at a speed v1 between 1 m/s and 2 m/s;
- and a second section, which is an upper flocs-growing section (30b) located above the first mixing section (30a), also comprising a plurality of triangular baffles (31) that divides the upper flocs-growing second section (30b) in channels or sections through which the water circulates, the baffles being located at a distance h4 from each other so that the water circulates at a speed v2 between 0.3 m/s and 1 m/s;
and the treated water collection means (12) comprises:
- a plurality of vertical baffles (32) between the lamella pack (27) outlet and the holes (26) of the perforated pipes (25), forming sections with a width h5 between two consecutive vertical baffles (32), and creating vertical channels for the treated water downwards;
said dissolved ozone flotation unit further comprising:
- a plurality of vertical baffles (33) below the perforated pipes (25), delimiting the plurality of sediment discharge zones (14);
- a plurality of triangular baffles (34), located at the upper part of each sediment discharge zone (14) below the perforated pipes (25), having an upper vertex of the triangle between 30º and 90º;
- a sediment level sensor (35) configured to detect the height variations of the level (19a, 19b) of the sediment layer (19) formed inside the sediment discharge zones (14) by accumulation, for opening and closing the sediment valves (16) (16) to discharge the sediments (c), and for maintaining the sediment level above the bottom of the triangular baffles (34), so that the height of the sediment layer (19) is always kept between 100 mm and 400 mm, preferably between 200 mm and 300 mm, over the lower part of the triangular baffles (34).

2. The unit according to claim 1, wherein the gas is a mixture of ozone with air or oxygen.

3. The unit according to any one of claims 1 or 2, wherein the gas is composed of 3% to 11% ozone and 89% to 97% air or oxygen.

4. The unit according to any one of claims 1 to 3, wherein the gradient velocity of the mechanical mixer (42) is between 700 and 1000 sec-1.

5. The unit according to any one of claims 1 to 4, wherein the triangular baffles (31) in the mixing section (30a) and in the upper flocs-growing section (30b) have an inclined shape with an angle α from 25º to 45.

6. The unit according to any one of claims 1 to 5, wherein the height of the sediment level (19) is between 200 mm and 300 mm over the lower part of the triangular baffles (34).

7. The unit according to any one of claims 1 to 6, wherein the unit comprises cleaning means, said cleaning means comprising:
- a water level sensor (38), configured to control the variations of the water level (8) inside the flotation tank (9); said water level sensor (38) being connected to
- a first opening-closing water valve (36) located in the recirculation pipe (43), for recirculating treated water with ozone microbubbles (b) into the contact tank (28); and being also connected to
- a second opening-closing water valve (37) that is located in a perforated pipe (44) configured to redirect the flow of treated water with ozone microbubbles (b) into the flotation tank (9), this perforated pipe (44) being located below the lamella pack (27) and below the perforated pipes (25) of the treated water collection means inside the flotation tank (9), this perforated pipe (44) being connected to the recirculation pipe (43); the perforations in said perforated pipe (44) being injection points (45), those injection points (45) being any type of nozzles or holes;
wherein the perforated pipes (25) of the treated water collection means (12) are configured to inject air macrobubbles into the flotation tank (9), wherein a blower (39) at a second end of the perforated pipes (25) is configured to inject a flow of air through the perforated pipes (25); and wherein a first and a second blower valves (41, 40) at the first and second ends of the perforated pipes (25), respectively, are configured to open or close so as to stop (valve 41) the flow of treated water into the treated water tank (13) through the treated water pipe (17) and blow (valve 40) the flow of air into the perforated pipes (25).

8. A process for treating water by means of the flotation unit defined in any one of claims 1 to 7, comprising:
a) injecting a flow of raw water, a coagulant and a flow of recirculated water with ozone microbubbles (b) into the coagulation and oxidation zone (29) of the contact tank (28);
b) collecting the treated water into the treated water tank (13) through the treated water pipe (17), after the mixture of raw water, ozone microbubbles and coagulant that form flocs passes through the contact tank (28), the flotation zone (9a), the lamella pack (27), the plurality of vertical baffles (32) between the lamella pack (27) outlet and the holes (26) of the perforated pipes (25);
wherein the process comprises monitoring the sediment level (19) inside the sediment discharge zones (14) by means of the sediment level sensor (35), the sediment level sensor (35) sending an opening signal to the sediment valve (16) of the sediment discharge zones (14) when an upper sediment level (19a) is reached, so as to discharge the sediments (c) outside the flotation unit through the sediment pipes (15) until the sediment level (19) reaches its lower level (19b) above the triangular baffles (34).

9. The process for treating water according to claim 8, wherein the hydraulic residence time in the coagulation and oxidation zone (29) is between 5 and 15 min.

10. The process for treating water according to any one of claims 8 or 9, wherein the process comprises a cleaning and unclogging stage, including the following steps:
- closing the injection of the raw water flow (a1) into the flotation unit when the water level sensor (38) detects that the height (h₁) of the water level (8) inside the flotation tank (9) reaches a maximum value;
- putting the skimmer (11) into operation for completely eliminating the sludge layer (10) at the flotation tank (9) until the sludge layer thickness h₂ is equal to 0;
- at the same time, opening the sediments valves (16) so as to discharge the flow of sediments (c) to the outside of the flotation unit through the sediment pipes (15);
- closing the first opening-closing water valve (36) in the recirculation pipe (43) and opening the second opening-closing water valve (37) in the perforated pipe (44) for injecting the flow of treated water with ozone microbubbles (b) into the flotation tank (9) through the injection points (45) of the perforated pipe (44), under the lamella pack (27);
- closing the first blower valve (41) and opening the second blower valve (40) for stopping the flow of treated water into the water tank (17), and turning on the blower (39) so that an air flow is injected through the holes (26) of the perforated pipes (25), producing air macrobubbles which create a mixing effect throughout the entire flotation tank (9) that together with the ozone microbubbles create a cleaning effect on the solids adhering to the lamella or that have blocked the holes (26) in the perforated pipes (25), as well as the removal of biological fouling; and
- subsequently, opening the sediment valves (16) so as to discharge the sediments (c) and all the contents of the flotation zone (9a) to the outside of the flotation unit by the sediment pipes (15).

11. The process for treating water according to claim 10, wherein the cleaning stage lasts between 15 and 30 minutes.

12. A use of the flotation unit defined in any one of claims 1 to 7 for cleaning and/or purifying water.

## Patentansprüche

1. Flotationseinheit mit gelöstem Ozon vom Typ DAF, bei der das verwendete Gas Ozon enthält, umfassend:
einen Kontaktbehälter (28) mit einem Rohwasserflusseinlass (a1), einer Koagulationszone (29), die einen mechanischen Mischer (42) umfasst und mit dem Rohwasserflusseinlass (a1) verbunden ist, sowie einer der Koagulationszone (29) benachbarten Flockungszone (30);
einen Flotationsbehälter (9), der mit dem Kontaktbehälter (28) verbunden ist und umfasst:
eine Flotationszone (9a) im oberen Teil des Flotationsbehälters (9);
eine Abschöpfeinrichtung (11) zum hydraulischen oder mechanischen Entfernen von schwimmfähigem Schlamm (e);
eine vertikale Trennwand (7) an dem Eingang der Flotationszone (9a), die dazu eingerichtet ist, sich über die Wassereinlasssektion zu erstrecken, um einen Spalt zwischen einem Pegel (8), der der Wasseroberfläche im Inneren des Flotationsbehälters (9) entspricht, und dem oberen Ende der vertikalen Trennwand (7) auszubilden, wobei der Wasserfluss durch diesen Spalt in die Flotationszone (9a) eintritt; sowie
ein Lamellenpaket (27), das sich im unteren Teil der Flotationszone (9a) befindet;
eine Sammeleinrichtung (12) für aufbereitetes Wasser zum Sammeln des aufbereiteten Wassers, mit:
einem oder mehreren Rohren (25), die mit Löchern (26) perforiert und unterhalb des Lamellenpakets (27) angeordnet sind, wobei die perforierten Rohre (25) entlang der Länge des Flotationsbehälters (29) angeordnet sind, damit das aufbereitete Wasser durch die Löcher (26) fließen kann;
einen Behälter (13) für aufbereitetes Wasser, der dazu eingerichtet ist, das aufbereitete Wasser aufzunehmen, und ein Rohr (17) für aufbereitetes Wasser umfasst, die ein erstes Ende der perforierten Rohre (25) mit dem Innenraum des Behälters (13) verbindet; und ein Auslassrohr (21) für aufbereitetes Wasser hat, durch die das endgültige aufbereitete Wasser (d) den Behälter (13) für aufbereitetes Wasser und die Flotationseinheit mit gelöstem Ozon verlässt;
eine Vielzahl von Sedimentabführzonen (14), die sich unterhalb der perforierten Rohre (25) befinden und dazu eingerichtet sind, die Dekantierung von zuvor nicht aufgeschwommenen Partikeln durchzuführen, wobei jede Sedimentabführzone ein Sedimentrohr (15) mit einem sich öffnenden und schließenden Sedimentventil (16) zum Austritt von Sedimenten hat; und
eine Mikroblasen-Erzeugungsvorrichtung (46), die einen ozonhaltigen Gasstrom (p) in einen Abschnitt (r) des aufbereiteten Wassers (d) einlöst und so ein rezirkuliertes, mit Ozon-Mikroblasen (b) versetztes aufbereitetes Wasser ausbildet, das in den Kontaktbehälter (28) eingeleitet wird;
**dadurch gekennzeichnet, dass**:
der mechanische Mischer (42) im Inneren des Kontaktbehälters (28) einen Mischgeschwindigkeitsgradienten zwischen 500 und 1.500 s⁻¹, vorzugsweise zwischen 700 und 1.000 s⁻¹, hat; und die Flockungszone (30) oberhalb der Koagulationszone (29) angeordnet ist; wobei die Koagulationszone (29) einen Einlass zum Einleiten von rezirkuliertem, mit Ozon-Mikroblasen (b) versetztem, aufbereitetem Wasser umfasst, der über ein Rezirkulationsrohr (43) mit der Mikroblasen-Erzeugungsvorrichtung (46) verbunden ist; sowie einen Koagulierungsmittel-Einlass, so dass durch die Einwirkung des Ozons in dem Wasser gleichzeitig eine Oxidation und eine Koagulation erreicht wird und die Mikroblasen in der Flockungszone (30) im Inneren der Flocken eingeschlossen werden; wobei die Flockungszone (30) weiterhin in zwei Sektionen unterteilt ist:
eine erste Sektion, bei der es sich um eine Mischsektion (30a) handelt, die sich an dem Auslass der Koagulations- und Oxidationszone (29) befindet und umfasst:
ein Flockungsmittel-Einlassrohr an dem Eingang zum Einlassen von Flockungsmittel (m);
eine Vielzahl dreieckiger Leitbleche (31), die die erste Mischsektion (30a) in Kanäle oder Sektionen unterteilen, durch die das Wasser zirkuliert, wobei die dreieckigen Leitbleche (31) in einem Abstand h₃ voneinander angeordnet sind, sodass das Wasser mit einer Geschwindigkeit v1 zwischen 1 m/s und 2 m/s zirkuliert;
sowie eine zweite Sektion, bei der es sich um eine obere Flockenwachstumssektion (30b) handelt, die oberhalb der ersten Mischsektion (30a) angeordnet ist und ebenfalls eine Vielzahl dreieckiger Leitbleche (31) umfasst, die die obere Flockenwachstumssektion (30b) in Kanäle oder Sektionen unterteilen, durch die das Wasser zirkuliert, wobei die Leitbleche in einem Abstand h4 voneinander angeordnet sind, sodass das Wasser mit einer Geschwindigkeit v2 zwischen 0,3 m/s und 1 m/s zirkuliert;
und die Sammeleinrichtung (12) für aufbereitetes Wasser umfasst:
eine Vielzahl vertikaler Leitbleche (32) zwischen dem Auslass des Lamellenpakets (27) und den Löchern (26) der perforierten Rohre (25), die Sektionen mit einer Breite h5 zwischen zwei aufeinanderfolgenden vertikalen Leitblechen (32) ausbilden und vertikale Kanäle für das absteigende aufbereitete Wasser schaffen;
wobei die Flotationseinheit für gelöstes Ozon weiterhin umfasst:
eine Vielzahl vertikaler Leitbleche (33) unterhalb der perforierten Rohre (25), die die Vielzahl von Sedimentabführzonen (14) begrenzen;
eine Vielzahl dreieckiger Leitbleche (34), die sich in dem oberen Teil jeder Sedimentabführzone (14) unterhalb der perforierten Rohre (25) befinden und deren oberer Scheitelpunkt des Dreiecks zwischen 30° und 90° liegt;
einen Sedimenpegelsensor (35), der dazu eingerichtet ist, die Höhenänderungen des Pegels (19a, 19b) der Sedimentschicht (19) zu erfassen, die sich durch Ansammlung innerhalb der Sedimentabführzonen (14) gebildet hat, um die Sedimentventile (16) zum Ablassen der Sedimente (c) zu öffnen und zu schließen, und zur Aufrechterhaltung des Sedimentpegels oberhalb der Unterseite der dreieckigen Leitbleche (34), so dass die Höhe der Sedimentschicht (19) über dem unteren Teil der dreieckigen Leitbleche (34) stets zwischen 100 mm und 400 mm, vorzugsweise zwischen 200 mm und 300 mm, gehalten wird.

2. Einheit nach Anspruch 1, bei der das Gas ein Gemisch aus Ozon und Luft oder Sauerstoff ist.

3. Einheit nach einem der Ansprüche 1 oder 2, bei der das Gas aus 3 % bis 11 % Ozon und 89 % bis 97 % Luft oder Sauerstoff besteht.

4. Einheit nach einem der Ansprüche 1 bis 3, bei der der Geschwindigkeitsgradient des mechanischen Mischers (42) zwischen 700 und 1.000 s⁻¹ liegt.

5. Einheit nach einem der Ansprüche 1 bis 4, bei der die dreieckigen Leitbleche (31) in der Mischsektion (30a) und in der oberen Flockenwachstumssektion (30b) eine geneigte Form mit einem Winkel a von 25° bis 45° aufweisen.

6. Einheit nach einem der Ansprüche 1 bis 5, bei der die Höhe des Sedimentpegels (19) über dem unteren Teil der dreieckigen Leitbleche (34) zwischen 200 mm und 300 mm beträgt.

7. Einheit nach einem der Ansprüche 1 bis 6, wobei die Einheit eine Reinigungseinrichtung umfasst und die Reinigungseinrichtung umfasst:
einen Wasserpegelsensor (38), der dazu eingerichtet ist, die Schwankungen des Wasserpegels (8) im Inneren des Flotationstanks (9) zu überwachen; wobei der Wasserpegelsensor (38) verbunden ist mit:
einem ersten Wasser-Öffnungs/Schließ-Ventil (36), das sich in dem Rezirkulationsrohr (43) befindet, um mit Ozon-Mikroblasen (b) behandeltes Wasser in den Kontaktbehälter (28) zurückzuführen; und zudem verbunden ist mit
einem zweiten Wasser-Öffnungs/Schließ-Ventil (37), das sich in einem perforierten Rohr (44) befindet und dazu eingerichtet ist, den Fluss des mit Ozon-Mikroblasen (b) behandelten Wassers in den Flotationsbehälter (9) umzuleiten, wobei sich dieses perforierte Rohr (44) unterhalb des Lamellenpakets (27) und unterhalb der perforierten Rohre (25) der Sammeleinrichtung für aufbereitetes Wasser im Inneren des Flotationsbehälters (9) befindet und dieses perforierte Rohr (44) mit dem Rezirkulationsrohr (43) verbunden ist; wobei die Perforationen in dem perforierten Rohr (44) Einspritzpunkte (45) darstellen und diese Einspritzpunkte (45) jeder Typ von Düsen oder Löchern sein können;
wobei die perforierten Rohre (25) der Sammeleinrichtung (12) für aufbereitetes Wasser so ausgebildet sind, dass sie Makroblasen in den Flotationsbehälter (9) einblasen, wobei ein Gebläse (39) an einem zweiten Ende der perforierten Rohre (25) dazu eingerichtet ist, einen Luftstrom durch die perforierten Rohre (25) einzublasen; und ein erstes sowie ein zweites Gebläseventil (41, 40) an dem ersten bzw. zweiten Ende der perforierten Rohre (25) dazu eingerichtet sind, sich zu öffnen oder zu schließen, um den Zufluss von aufbereitetem Wasser in den Behälter (13) für aufbereitetes Wasser durch das Rohr (17) für aufbereitetes Wasser zu unterbrechen (Ventil 41) und den Luftstrom in die perforierten Rohre (25) einzuleiten (Ventil 40).

8. Wasseraufbereitungsvorgang mittels der in einem der Ansprüche 1 bis 7 definierten Flotationseinheit, umfassend:
a) Einleiten eines Rohwasserstroms, eines Koagulierungsmittels und eines mit Ozon-Mikroblasen (b) versetzten Rezirkulationswasserstroms in die Koagulations- und Oxidationszone (29) des Kontaktbehälters (28);
b) Sammeln des aufbereiteten Wassers in dem Behälter (13) für aufbereitetes Wasser über das Rohr (17) für aufbereitetes Wasser, nachdem das Gemisch aus Rohwasser, Ozon-Mikroblasen und Koagulierungsmittel, das Flocken bildet, den Kontaktbehälter (28), die Flotationszone (9a), das Lamellenpaket (27) die Vielzahl vertikaler Leitbleche (32) zwischen dem Auslass des Lamellenpakets (27) und den Öffnungen (26) der perforierten Rohre (25) durchströmt hat;
wobei der Vorgang das Überwachen des Sedimentpegels (19) innerhalb der Sedimentabführzonen (14) mittels des Sedimentpegelsensor (35) umfasst, wobei der Sedimentpegelsensor (35) bei Erreichen eines oberen Sedimentpegels (19a) ein Öffnungssignal an das Sedimentventil (16) der Sedimentabführzonen (14) sendet, um die Sedimente (c) über die Sedimentrohre (15) aus der Flotationseinheit abzuführen, bis der Sedimentpegel (19) seinen unteren Pegel (19b) oberhalb der dreieckigen Leitbleche (34) erreicht hat.

9. Wasseraufbereitungsvorgang nach Anspruch 8, bei dem die hydraulische Verweildauer in der Koagulations- und Oxidationszone (29) zwischen 5 und 15 min beträgt.

10. Wasseraufbereitungsvorgang nach einem der Ansprüche 8 oder 9, wobei der Vorgang eine Reinigungs- und Freimachphase umfasst, die die folgenden Schritte beinhaltet:
Unterbrechen des Einleitens des Rohwasserstroms (a1) in die Flotationseinheit, wenn der Wasserpegelsensor (38) erfasst, dass die Höhe (h₁) des Wasserstands (8) in dem Flotationsbehälter (9) einen Maximalwert erreicht;
Inbetriebnehmen der Abschöpfeinrichtung (11) zur vollständigen Beseitigung der Schlammschicht (10) in dem Flotationsbehälter (9), bis die Schlammschichtdicke h₂ gleich 0 ist;
gleichzeitig Öffnen der Sedimentventile (16), um den Sedimentstrom (c) über die Sedimentrohre (15) aus der Flotationseinheit nach außen abzuleiten;
Schließen des ersten Wasser-Öffnungs/Schließ-Ventils (36) in dem Rezirkulationsrohr (43) und Öffnen des zweiten Wasser-Öffnungs/Schließ-Ventils (37) in dem perforierten Rohr (44), um den Strom aus mit Ozon-Mikroblasen (b) angereichertem aufbereitetem Wasser über die Einspritzpunkte (45) des perforierten Rohrs (44) unterhalb des Lamellenpakets (27) einzuleiten;
Schließen des ersten Gebläseventils (41) und Öffnen des zweiten Gebläseventils (40), um den Zufluss von aufbereitetem Wasser in den Wassertank (17) zu unterbrechen, sowie Einschalten des Gebläses (39), sodass ein Luftstrom durch die Löcher (26) der perforierten Rohre (25) eingeblasen wird, wodurch Luftmakroblasen entstehen, die einen Vermischungseffekt in dem gesamten Flotationsbehälter (9) erzeugen, der zusammen mit den Ozonmikroblasen eine reinigende Wirkung auf die an den Lamellen haftenden oder die Löcher (26) in den perforierten Rohren (25) verstopfenden Feststoffe sowie das Entfernen von biologischem Bewuchs bewirkt; und
anschließend Öffnen der Sedimentventile (16), um die Sedimente (c) und sämtliche Inhalte der Flotationszone (9a) über die Sedimentrohre (15) aus der Flotationseinheit nach außen abzulassen.

11. Wasseraufbereitungsvorgang nach Anspruch 10, bei dem die Reinigungsphase zwischen 15 und 30 Minuten dauert.

12. Verwendung der in einem der Ansprüche 1 bis 7 definierten Flotationseinheit zum Säubern und/oder Reinigen von Wasser.

## Revendications

1. Unité de flottation à l'ozone dissous du type DAF, dans laquelle le gaz utilisé contient de l'ozone, comprenant :
- une cuve de contact (28), ayant une entrée d'écoulement d'eau brute (a1), une zone de coagulation (29) contenant un mélangeur mécanique (42) et reliée à ladite entrée d'écoulement d'eau brute (a1), et une zone de floculation (30) adjacente à ladite zone de coagulation (29) ;
- une cuve de flottation (9) reliée à ladite cuve de contact (28) et comprenant :
∘ une zone de flottation (9a) dans la partie supérieure de ladite cuve de flottation (9) ;
∘ un écumeur (11) pour l'élimination hydraulique ou mécanique des boues flottantes (e) ;
∘ une cloison verticale (7) à l'entrée de la zone de flottation (9a), configurée pour s'étendre à travers la section d'entrée d'eau afin de former une fente entre un niveau (8) correspondant à la surface de l'eau à l'intérieur de la cuve de flottation (9) et l'extrémité supérieure de la cloison verticale (7), l'écoulement d'eau entrant dans la zone de flottation (9a) par ladite fente ; et
∘ un faisceau lamellaire (27) situé dans la partie inférieure de la zone de flottation (9a) ;
- un moyen de collecte d'eau traitée (12) pour collecter l'eau traitée, comprenant :
∘ un ou plusieurs tuyaux (25) perforés de trous (26) et situés sous le faisceau lamellaire (27), dans laquelle les tuyaux perforés (25) sont disposés sur la longueur de la cuve de flottation (29) pour que l'eau traitée s'écoule à travers les trous (26) ;
∘ une cuve d'eau traitée (13) configurée pour collecter l'eau traitée, ayant un tuyau d'eau traitée (17) qui relie une première extrémité des tuyaux perforés (25) avec la partie interne de la cuve (13) ; et ayant un tuyau de sortie d'eau traitée (21), à travers lequel l'eau traitée finale (d) sort de la cuve d'eau traitée (13) et de l'unité de flottation à l'ozone dissous ;
- une pluralité de zones d'évacuation des sédiments (14), situées sous les tuyaux perforés (25) et configurées pour la décantation des particules non préalablement flottées, où chaque zone d'évacuation des sédiments a un tuyau de sédiments (15) avec une vanne de sédiments (16) d'ouverture et de fermeture pour la sortie des sédiments ; et
- un dispositif de génération de microbulles (46) qui dissout un écoulement de gaz contenant de l'ozone (p) dans une partie (r) de l'eau traitée (d) formant ainsi une eau traitée recirculée avec des microbulles d'ozone (b) qui est injectée dans la cuve de contact (28) ;
**caractérisée en ce que** :
le mélangeur mécanique (42) à l'intérieur de la cuve de contact (28) a une vitesse de gradient de mélange comprise entre 500 et 1500 sec-1, de préférence entre 700 et 1000 sec-1 ; et la zone de floculation (30) est située au-dessus de la zone de coagulation (29) ; ladite zone de coagulation (29) comprenant une entrée pour l'injection d'eau traitée recirculée avec des microbulles d'ozone (b) reliée au dispositif de génération de microbulles (46) par un tuyau de recirculation (43) ; et une entrée de coagulant, de sorte que l'oxydation est obtenue conjointement avec la coagulation par l'action de l'ozone dans l'eau, et que les microbulles sont piégées à l'intérieur des flocs dans la zone de floculation (30) ; ladite zone de floculation (30) étant en outre divisée en deux sections :
- une première section, qui est une section de mélange (30a), située à la sortie de la zone de coagulation et d'oxydation (29), comprenant :
∘ un tuyau d'entrée de floculant à l'entrée pour injecter le floculant (m) ;
∘ une pluralité de cloisons triangulaires (31) qui divise la première section de mélange (30a) en canaux ou sections à travers lesquels l'eau circule, les cloisons triangulaires (31) étant situées à une distance h₃ les unes des autres de sorte que l'eau circule à une vitesse v1 comprise entre 1 m/s et 2 m/s ;
- et une deuxième section, qui est une section supérieure de croissance des flocs (30b) située au-dessus de la première section de mélange (30a), comprenant également une pluralité de cloisons triangulaires (31) qui divise la deuxième section supérieure de croissance des flocs (30b) en canaux ou sections à travers lesquels l'eau circule, les cloisons étant situées à une distance h4 les unes des autres de sorte que l'eau circule à une vitesse v2 comprise entre 0,3 m/s et 1 m/s ;
et le moyen de collecte d'eau traitée (12) comprend :
- une pluralité de cloisons verticales (32) entre la sortie du faisceau lamellaire (27) et les trous (26) des tuyaux perforés (25), formant des sections de largeur h5 entre deux cloisons verticales (32) consécutives, et créant des canaux verticaux pour l'eau traitée vers le bas ;
ladite unité de flottation à l'ozone dissous comprenant en outre :
- une pluralité de cloisons verticales (33) sous les tuyaux perforés (25), délimitant la pluralité de zones d'évacuation des sédiments (14) ;
- une pluralité de cloisons triangulaires (34), situées dans la partie supérieure de chaque zone d'évacuation des sédiments (14) sous les tuyaux perforés (25), ayant un sommet supérieur du triangle compris entre 30° et 90° ;
- un capteur de niveau de sédiments (35) configuré pour détecter les variations de hauteur du niveau (19a, 19b) de la couche de sédiments (19) formée à l'intérieur des zones d'évacuation des sédiments (14) par accumulation, pour l'ouverture et la fermeture des vannes de sédiments (16) pour évacuer les sédiments (c), et pour maintenir le niveau de sédiments au-dessus de la partie inférieure des cloisons triangulaires (34), de sorte que la hauteur de la couche de sédiments (19) soit toujours maintenue entre 100 mm et 400 mm, de préférence entre 200 mm et 300 mm, au-dessus de la partie inférieure des cloisons triangulaires (34).

2. Unité selon la revendication 1, dans laquelle le gaz est un mélange d'ozone avec de l'air ou de l'oxygène.

3. Unité selon l'une quelconque des revendications 1 ou 2, dans laquelle le gaz est composé de 3 % à 11 % d'ozone et de 89 % à 97 % d'air ou d'oxygène.

4. Unité selon l'une quelconque des revendications 1 à 3, dans laquelle la vitesse de gradient du mélangeur mécanique (42) est comprise entre 700 et 1000 sec-1.

5. Unité selon l'une quelconque des revendications 1 à 4, dans laquelle les cloisons triangulaires (31) dans la section de mélange (30a) et dans la section supérieure de croissance des flocs (30b) ont une forme inclinée avec un angle a de 25° à 45.

6. Unité selon l'une quelconque des revendications 1 à 5, dans laquelle la hauteur du niveau de sédiments (19) est comprise entre 200 mm et 300 mm au-dessus de la partie inférieure des cloisons triangulaires (34).

7. Unité selon l'une quelconque des revendications 1 à 6, dans laquelle l'unité comprend des moyens de nettoyage, lesdits moyens de nettoyage comprenant :
- un capteur de niveau d'eau (38), configuré pour contrôler les variations du niveau d'eau (8) à l'intérieur de la cuve de flottation (9) ; ledit capteur de niveau d'eau (38) étant relié à :
- une première vanne d'eau d'ouverture-fermeture (36) située dans le tuyau de recirculation (43), pour recirculer l'eau traitée avec des microbulles d'ozone (b) dans la cuve de contact (28) ; et étant également relié à :
- une deuxième vanne d'eau d'ouverture-fermeture (37) qui est située dans un tuyau perforé (44) configuré pour rediriger l'écoulement d'eau traitée avec des microbulles d'ozone (b) dans la cuve de flottation (9), ce tuyau perforé (44) étant situé sous le faisceau lamellaire (27) et sous les tuyaux perforés (25) des moyens de collecte d'eau traitée à l'intérieur de la cuve de flottation (9), ce tuyau perforé (44) étant relié au tuyau de recirculation (43) ; les perforations dudit tuyau perforé (44) étant des points d'injection (45), ces points d'injection (45) étant de n'importe quel type de buses ou de trous ;
dans laquelle les tuyaux perforés (25) des moyens de collecte d'eau traitée (12) sont configurés pour injecter des macrobulles d'air dans la cuve de flottation (9), dans laquelle un souffleur (39) à une deuxième extrémité des tuyaux perforés (25) est configuré pour injecter un écoulement d'air à travers les tuyaux perforés (25) ; et dans laquelle une première et une deuxième vanne de souffleur (41, 40) aux première et deuxième extrémités des tuyaux perforés (25), respectivement, sont configurées pour s'ouvrir ou se fermer de manière à arrêter (vanne 41) l'écoulement d'eau traitée dans la cuve d'eau traitée (13) à travers le tuyau d'eau traitée (17) et souffler (vanne 40) l'écoulement d'air dans les tuyaux perforés (25).

8. Procédé de traitement de l'eau au moyen de l'unité de flottation selon l'une quelconque des revendications 1 à 7, comprenant :
a) l'injection d'un écoulement d'eau brute, d'un coagulant et d'un écoulement d'eau recirculée avec des microbulles d'ozone (b) dans la zone de coagulation et d'oxydation (29) de la cuve de contact (28) ;
b) la collecte de l'eau traitée dans la cuve d'eau traitée (13) à travers le tuyau d'eau traitée (17), après que le mélange d'eau brute, de microbulles d'ozone et de coagulant formant des flocs passe à travers la cuve de contact (28), la zone de flottation (9a), le faisceau lamellaire (27), la pluralité de cloisons verticales (32) entre la sortie du faisceau lamellaire (27) et les trous (26) des tuyaux perforés (25) ;
dans lequel le procédé comprend la surveillance du niveau de sédiments (19) à l'intérieur des zones d'évacuation des sédiments (14) au moyen du capteur de niveau de sédiments (35), le capteur de niveau de sédiments (35) envoyant un signal d'ouverture à la vanne de sédiments (16) des zones d'évacuation des sédiments (14) lorsqu'un niveau supérieur de sédiments (19a) est atteint, afin d'évacuer les sédiments (c) à l'extérieur de l'unité de flottation par les tuyaux de sédiments (15) jusqu'à ce que le niveau de sédiments (19) atteigne son niveau inférieur (19b) au-dessus des cloisons triangulaires (34).

9. Procédé de traitement de l'eau selon la revendication 8, dans lequel le temps de séjour hydraulique dans la zone de coagulation et d'oxydation (29) est compris entre 5 et 15 min.

10. Procédé de traitement de l'eau selon l'une quelconque des revendications 8 ou 9, dans lequel le procédé comprend une étape de nettoyage et de débouchage, comprenant les étapes suivantes :
- la fermeture de l'injection de l'écoulement d'eau brute (a1) dans l'unité de flottation lorsque le capteur de niveau d'eau (38) détecte que la hauteur (h₁) du niveau d'eau (8) à l'intérieur de la cuve de flottation (9) atteint une valeur maximale ;
- la mise en marche de l'écumeur (11) pour éliminer complètement la couche de boues (10) au niveau de la cuve de flottation (9) jusqu'à ce que l'épaisseur de la couche de boues h₂ soit égale à 0 ;
- simultanément, l'ouverture des vannes de sédiments (16) afin d'évacuer l'écoulement de sédiments (c) vers l'extérieur de l'unité de flottation par les tuyaux de sédiments (15) ;
- la fermeture de la première vanne d'eau d'ouverture-fermeture (36) dans le tuyau de recirculation (43) et l'ouverture de la deuxième vanne d'eau d'ouverture-fermeture (37) dans le tuyau perforé (44) pour injecter l'écoulement d'eau traitée avec des microbulles d'ozone (b) dans la cuve de flottation (9) à travers les points d'injection (45) du tuyau perforé (44), sous le faisceau lamellaire (27) ;
- la fermeture de la première vanne de souffleur (41) et l'ouverture de la deuxième vanne de souffleur (40) pour arrêter l'écoulement d'eau traitée dans la cuve d'eau (17), et la mise en marche du souffleur (39) de sorte qu'un écoulement d'air soit injecté par les trous (26) des tuyaux perforés (25), produisant des macrobulles d'air qui créent un effet de mélange dans toute la cuve de flottation (9) qui, conjointement avec les microbulles d'ozone, créent un effet de nettoyage sur les solides adhérant aux lamelles ou ayant obstrué les trous (26) des tuyaux perforés (25), ainsi que l'élimination de l'encrassement biologique ; et
- ensuite, l'ouverture des vannes de sédiments (16) afin d'évacuer les sédiments (c) et tout le contenu de la zone de flottation (9a) vers l'extérieur de l'unité de flottation par les tuyaux de sédiments (15).

11. Procédé de traitement de l'eau selon la revendication 10, dans lequel l'étape de nettoyage dure entre 15 et 30 minutes.

12. Utilisation de l'unité de flottation selon l'une quelconque des revendications 1 à 7 pour le nettoyage et/ou la purification de l'eau.
